(19) Europäisches Patentamt / European Patent Office / Office européen des brevets

(11) **EP 3 746 742 B1**

(12) **EUROPEAN PATENT SPECIFICATION**

(45) Date of publication and mention
of the grant of the patent:
**27.11.2024 Bulletin 2024/48**

(21) Application number: **19704953.9**

(22) Date of filing: **25.01.2019**

(51) International Patent Classification (IPC):
**G01B 5/008** *(2006.01)* **G01B 5/28** *(2006.01)*

(52) Cooperative Patent Classification (CPC):
**G01B 21/30; G01B 5/008; G01B 5/28;**
**G01B 11/005**

(86) International application number:
**PCT/US2019/015142**

(87) International publication number:
**WO 2019/152270 (08.08.2019 Gazette 2019/32)**

(54) **METHOD AND APPARATUS FOR MEASURING SURFACE FINISH OF A WORKPIECE**

VERFAHREN UND VORRICHTUNG ZUR MESSUNG DER OBERFLÄCHENBESCHAFFENHEIT
EINES WERKSTÜCKS

PROCÉDÉ ET APPAREIL POUR MESURER L'ÉTAT DE SURFACE D'UNE PIÈCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.02.2018 US 201815887514**

(43) Date of publication of application:
**09.12.2020 Bulletin 2020/50**

(73) Proprietors:
• **Hexagon Metrology, Inc**
**North Kingstown, Rhode Island 02852 (US)**
• **Singh, Gurpreet**
**Providence, RI 02906 (US)**
• **Schneider, Jürgen**
**35578 Wetzlar (DE)**

(72) Inventors:
• **SINGH, Gurpreet**
**Providence, RI 02906 (US)**
• **SCHNEIDER, Jürgen**
**35578 Wetzlar (DE)**

(74) Representative: **Kaminski Harmann**
**Patentanwälte AG**
**Landstrasse 124**
**9490 Vaduz (LI)**

(56) References cited:
**EP-A1- 1 783 454 US-A1- 2016 116 268**

• **THOMAS C. BRISTOW: "Surface roughness and
waviness measurements for optical parts (Invited
Paper)", PROCEEDINGS OF SPIE MEDICAL
IMAGING 1997, vol. 1720, 20 October 1992
(1992-10-20), 1000 20th St. Bellingham WA
98225-6705 USA, pages 119 - 122, XP055583223,
ISSN: 0277-786X, ISBN: 978-1-5106-2781-9, DOI:
10.1117/12.132118**
• **QINGHU CHEN ET AL: "Surface roughness
evaluation by using wavelets analysis",
PRECISION ENGINEERING, vol. 23, no. 3, July
1999 (1999-07-01), AMSTERDAM, NL, pages 209
- 212, XP055583094, ISSN: 0141-6359, DOI:
10.1016/S0141-6359(99)00013-6**
• **MITUTOYO: "QUICK GUIDE TO SURFACE
ROUGHNESS MEASUREMENT Reference guide
for laboratory and workshop", 23 January 2017
(2017-01-23), XP055362128, Retrieved from the
Internet
<URL:http://www.mitutoyo.com/wp-content/upl
oads/2012/11/1984_Surf_Roughness_PG.pdf>
[retrieved on 20170405]**

## Description

### Priority

This application claims priority to U.S. Application No. 15/887,514 filed February 2, 2018.

### Technical Field

The present disclosure relates to coordinate measuring machines and, more particularly, to coordinate measuring machines that measure surface finish.

### Background Art

Coordinate measuring machines (CMMs) are used for accurately measuring a wide variety of work pieces. For example, CMMs can measure critical dimensions of aircraft engine components, surgical tools, and gun barrels. Precise and accurate measurements help to ensure that their underlying systems, such as an aircraft in the case of aircraft components, operate as specified. Measurement of surface finish, on the other hand, has historically been beyond the ability of CMMs, and required specialized US 2016/116268 A1 discloses a component measurement system having wavelength filtering for generating deviation reports associated with form error, waviness, and surface roughness of the component.

### Summary of Various Embodiments

In accordance with claim 5, a method of assessing, with a coordinate measuring machine, a surface finish of a workpiece having an expected geometry, includes measuring, with a probe of a coordinate measuring machine, a plurality of points on a surface of the workpiece, the plurality of points characterized by a spatial spectrum. The probe is a tactile stylus, and the plurality of points are evenly-spaced points.

The method also includes retrieving or receiving, from a computer memory, a cutoff frequency. In some embodiments, the cutoff frequency is equal to or greater than the maximum spatial frequency of the expected geometry.

Moreover, in some embodiments, the expected geometry is characterized by a maximum expected geometry spatial frequency, and the workpiece also has a surface waviness characterized by a maximum waviness frequency. In such embodiments, the cutoff frequency is above the greater of the maximum expected geometry spatial frequency and the maximum waviness frequency.

In addition, the method includes characterizing the surface finish of the workpiece by removing, from the spatial spectrum, all frequencies below the cutoff frequency to produce a surface finish spectrum, and comparing the surface finish spectrum to a specification for the workpiece, to determine whether the surface finish is within a specified tolerance.

Moreover, some embodiments also include measuring dimensions of the workpiece with the probe, the probe being the same probe used to measure for surface roughness. Consequently, embodiments of the method do not require a specialized or different probe for measuring both surface roughness and other features of the workpiece, since a single probe can be used for both.

In another embodiment, a system according to claim 1 is provided.

Another embodiment includes a non-transient computer programmed product bearing non-transient executable computer code as defined in claim 8.

### Brief Description of the Drawings

The foregoing features of embodiments will be more readily understood by reference to the following detailed description, taken with reference to the accompanying drawings, in which:

Figs. 1A-1D schematically illustrate an embodiment of a CMM;
Figs. 1E-1H schematically illustrate features of a workpiece;
Fig. 2A schematically illustrates a prior art system for measuring surface finish;
Fig. 2B-2H schematically illustrate features of illustrative workpieces;
Fig. 3 is a flowchart of a method for determining surface finish of a workpiece;
Figs. 4A-4C schematically illustrate measuring a plurality of points on a workpiece;
Figs. 4D-4G schematically illustrate filtering a spectrum.

**Detailed Description of Specific Embodiments**

Illustrative embodiments described below enable a coordinate measuring machine to measure the surface finish of a workpiece using the same measuring features used to measure the workpiece, without requiring a high-precision physical datum and probes of prior art surface finish measuring systems.

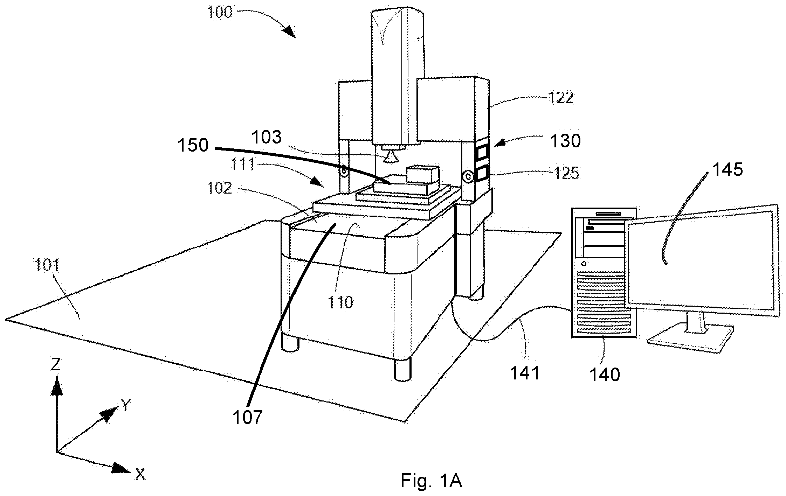

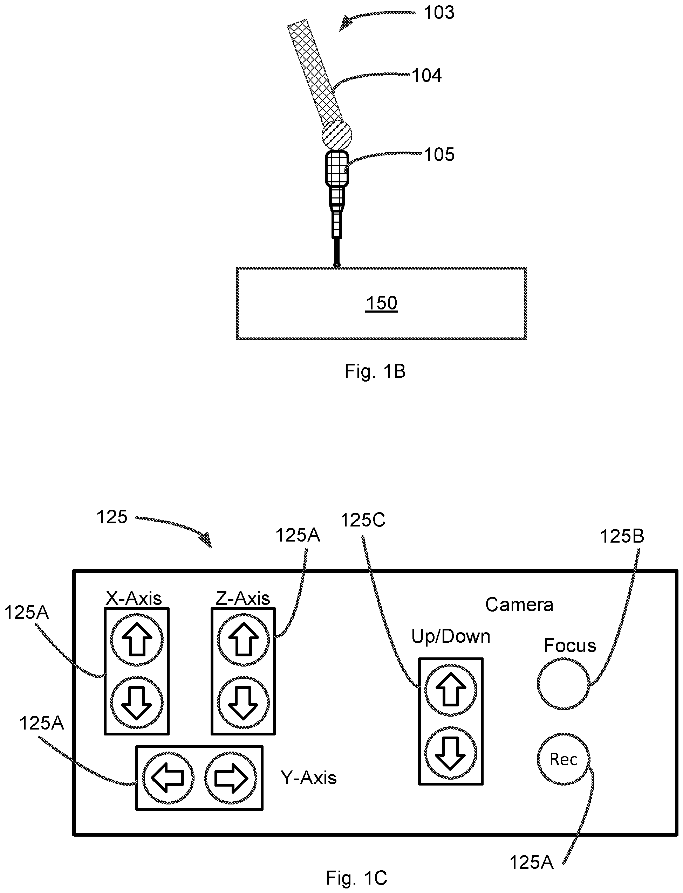

Fig. 1A shows one type of coordinate measurement machine 100 (hereinafter "CMM 100") that may be configured in accordance with illustrative embodiments. As known by those in the art, the CMM 100, which is supported on a floor 101 in this figure, measures an object or workpiece 150 on its bed/table/base (referred to as "base 102"). Generally, the base 102 of the CMM 100 defines an X-Y plane 110 that typically is parallel to the plane of the floor 101.

To measure an object within a measuring space 111 on its base 102, the CMM 100 has movable features 122 arranged to move a measuring device 103, such as a stylus 105 coupled with a movable arm 104. Alternatively, some embodiments move the base 102 (e.g., or a portion of the base 102, such as a moveable table 107) with respect to a stationary measuring device 103. Either way, the movable features 122 of the CMM 100 manipulate the relative positions of the measuring device 103 and the object with respect to one another to obtain the desired measurement. Accordingly, the CMM 100 can measure the location of a variety of features of the object or artifact.

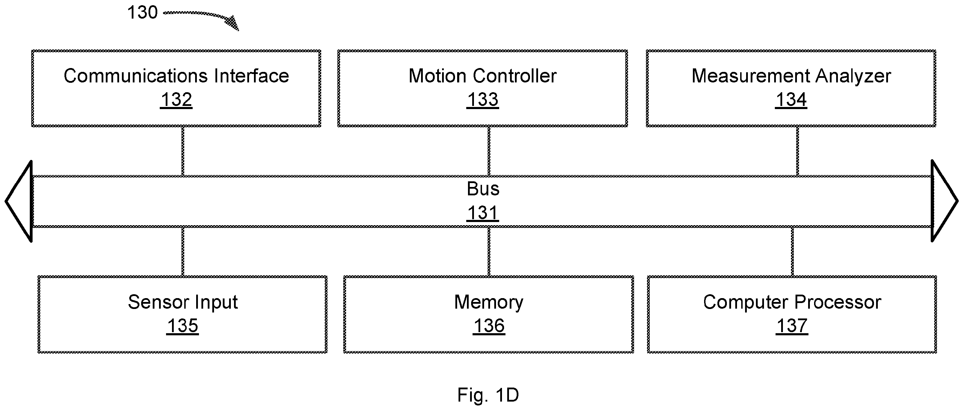

Some embodiments of a CMM 100 include a control system 130 (or "controller" or "control logic") configured to control the CMM 100, and process data acquired by the CMM. Fig. 1D schematically illustrates an embodiment of a control system 130 having several modules in electronic communication over a bus 131.

In general, some or all of the modules may be implemented in one or more integrated circuits, such as an ASIC, a gate array, a microcontroller, or a custom circuit, and at least some of the modules may be implemented in non-transient computer-implemented code capable of being executed on a computer processor 137.

Some embodiments include a computer processor 137, which may be a microprocessor as available from Intel Corporation, or an implementation of a processor core, such as an ARM core, to name but a few examples. The computer processor 137 may have on-board, non-transient digital memory (e.g., RAM or ROM) for storing data and/or computer code, including non-transient instructions for implementing some or all of the control system operations and methods. Alternatively, or in addition, the computer processor 137 may be operably coupled to other non-transient digital memory, such as RAM or ROM, or a programmable non-transient memory circuit for storing such computer code and/or control data. Consequently, some or all of the functions of the controller 130 may be implemented in software configured to execute on the computer processor.

The control system 130 includes a communications interface 132 configured to communicate with other parts of the CMM 100, or with external devices, such as computer 140 via link 141. To that end, communications interface 132 may include various communications interfaces, such as an Ethernet connection, a USB port, or a Firewire port, to name but a few examples.

The control system 130 also includes a sensor input 135 operably coupled to one or more sensors, such as a measuring device 103. The sensor input 135 is configured to receive electronic signals from sensors, and in some embodiments to digitize such signals, using a digital to analog ("D/A") converter. The sensor input 135 is coupled to other modules of the control system 130 to provide to such other modules the (digitized) signals received from sensors.

The motion controller 133 is configured to cause motion of one or more of the movable features of the CMM 100. For example, under control of the computer processor 137, the motion controller 133 may send electrical control signals to one or more motors within the CMM 100 to cause a movable features of the CMM 100 to move a measuring sensor 103 to various points within the measuring space 111 and take measurements of the workpiece 150 at such points. The motion controller 133 may control such motion in response to a measurement program stored in memory module 136, or stored in computer 140, or in response to manual control by an operator using manual controller 125, to name but a few examples.

Measurements taken by the CMM 100 may be stored in a memory module 136, which includes a non-transient memory. The memory module 136 is also configured to store, for example, a specification for a workpiece 150 to be measured; a specification for a calibration artifact; an error map; and non-transient instructions executable on the computer processor 137, to name but a few examples. Such instructions may include, among other things, instructions for controlling the moveable features of the CMM 100 for measuring a workpiece 150 and/or a calibration artifact; instructions for analyzing measurement data; and instructions for correcting measurement data (e.g., with an error map).

The measurement analyzer 134 is configured to process measurement data received from one or more sensors, such as measuring sensor 103. In some embodiments, the measurement analyzer 134 may revise the measurement data, for example by modifying the measurement data using an error map, and/or compare the measurement data to a specification, for example to assess deviation between a workpiece 150 and a specification for that workpiece 150. To that end, the measurement analyzer 134 may be a programmed digital signal processor integrated circuit, as known in the art.

Alternatively, or in addition, some embodiments couple the CMM 100 with an external computer (or "host computer") 140. In a manner similar to the control system 130, the host computer 140 has a computer processor such as those described above, and non-transient computer memory in communication with the processor of the CMM 100, and a display screen 145. The non-transient memory is configured to hold non-transient computer instructions capable of being executed by the processor of the computer 140, and/or to store non-transient data, such as data acquired as a result of the measurements of an object on the base 102.

Among other things, the host computer 140 may be a desktop computer, a tower computer, or a laptop computer, such as those available from Dell Inc., or even a tablet computer, such as the iPad™ available from Apple Inc. The host computer 140 may be coupled to the CMM 100 via a hardwired connection, such as an Ethernet cable 141, or via a wireless link, such as a Bluetooth link or a Wi-Fi link. The host computer 140 may, for example, include software to control the CMM 100 during use or calibration, and/or may include software configured to process data acquired during operation of the CMM 100. In addition, the host computer 140 may include a user interface configured to allow a user to manually operate the CMM 100.

Because their relative positions are determined by the action of the movable features 122, the CMM 100 may be considered as having knowledge of the relative locations of the base 102, and the object 150, with respect to its measuring device 103. More particularly, the computer processor 137 and/or computer 140 control and store information about the motions of the movable features 122. Alternately, or in addition, the movable features 122 of some embodiments include sensors that sense the locations of the table 107 and/or measuring device 103, and report that data to the computers 137 or 140. The information about the motion and positions of the table and/or measuring device 103 of the CMM 100 may be recorded in terms of a one-dimensional (e.g., X, Y, or Z), a two-dimensional (e.g., X-Y; X-Z; Y-Z) or three-dimensional (X-Y-Z) coordinate system referenced to a point on the CMM 100.

Some CMMs also include a manual user interface 125, such as that shown generically in Fig. 1A and as further schematically illustrated in Fig. 1C. As shown, the manual user interface 125 may have control buttons 125A and knobs 125B that allow a user to manually operate the CMM 100. Among other things, the interface 125 may enable the user to change the position of the measuring device 103 or base 102 (e.g., with respect to one another) and to record data describing the position of the measuring device 103 or base 102.

In a moving table CMM, for example, the measuring device 103 may also be movable via control buttons 125C. As such, the movable features 122 may respond to manual control, or be under control of the computer processor 137, to move the base 102 and/or the measuring device 103 relative to one another. Accordingly, this arrangement permits the object being measured to be presented to the measuring device 103 from a variety of angles, and in a variety of positions.

## Features of a workpiece

Generally, an object 150 to be measured (e.g., a "workpiece") has a pre-defined, specified shape with pre-defined, specified dimensions (together, the object's "expected geometry"). In practice, however, a workpiece 150 typically varies from that ideal shape. For example, a manufacturing error may result in a misshapen workpiece 150 that fails to meet its specification.

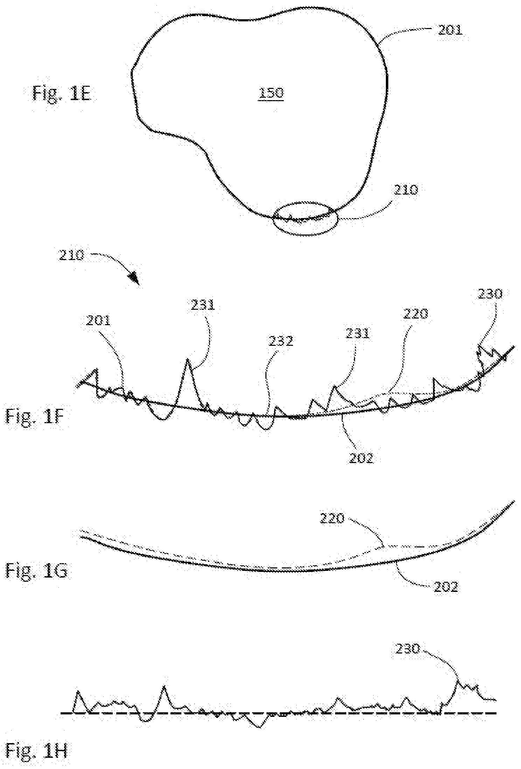

For purposes of illustration, Fig. 1E schematically illustrates an embodiment of a workpiece 150 having a surface 201. A portion 210 of the surface 201 of the workpiece 150 is schematically enlarged in Fig. 1F.

Variations in the manufacturing process may result in a deviation from the expected geometry, which may be known as surface waviness 220. As an example, the dashed line in Fig. 1F represents the waviness 220 of the surface 201 of the workpiece 150, and the solid line represents the specified surface 202 (part of the expected geometry). The jagged line 230 represents surface finish, as described further below.

The dashed line of Fig. 1G schematically illustrates the waviness 220 of the surface 201, showing variations from the specified surface 202. In some cases, waviness 220 causes the workpiece 150 to fail to meet its specification. In other cases, however, the workpiece 150 may still meet its specification even with some waviness.

Some workpieces also have a specified surface finish 230 (e.g., roughness or smoothness of the workpiece surface 201), the features of which typically have smaller dimensions (e.g., height and width) than manufacturing variations and surface waviness. Fig. 1F schematically illustrates the surface finish 230 within area 210 of the workpiece 150, and includes peaks 231 and valleys 232. Fig. 1H schematically illustrates the surface finish 230 of the surface 201, isolated from the surface 201 itself.

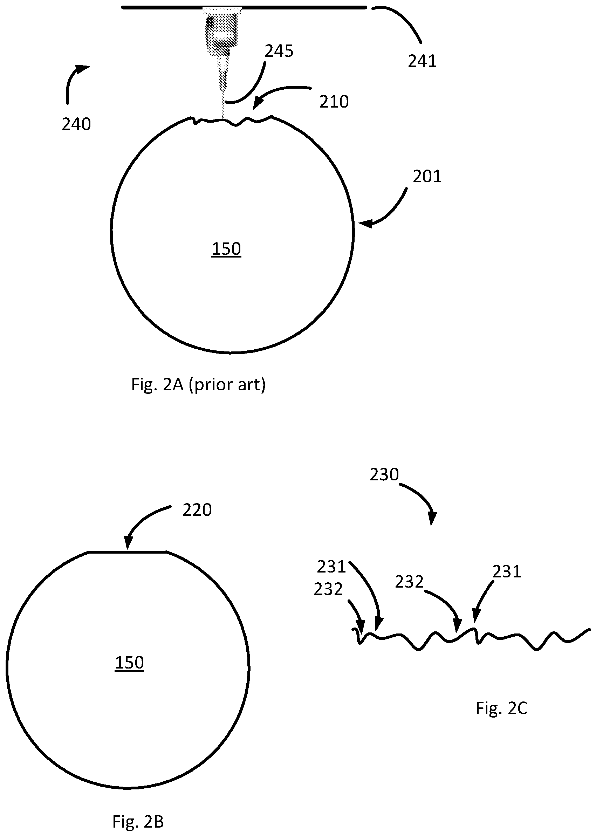

The surface finish 230 of a workpiece 150 may be a specified feature designed into the workpiece 150. For example, if the workpiece 150 of Fig. 2A is a grinding wheel, then its specification will require a minimum and/or maximum roughness to the surface finish 230 on its surface 201. Other workpieces may specify only a maximum surface finish 230. For example, if the workpiece 150 is a ball bearing, its specification may require a relatively smooth surface finish.

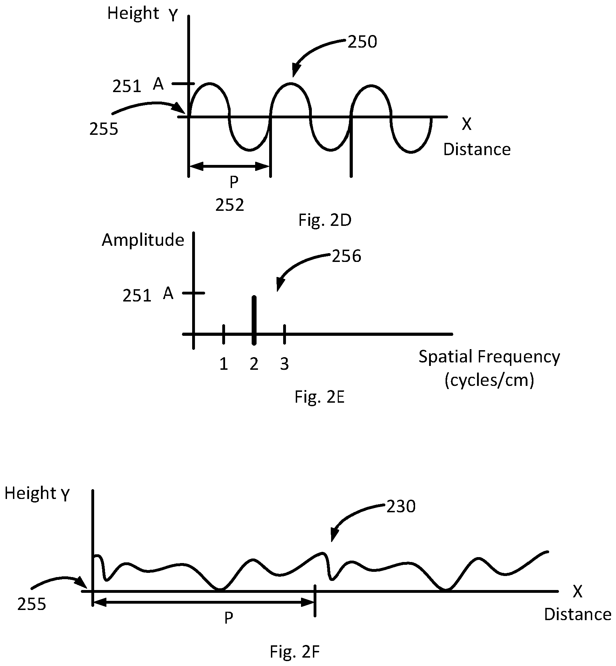

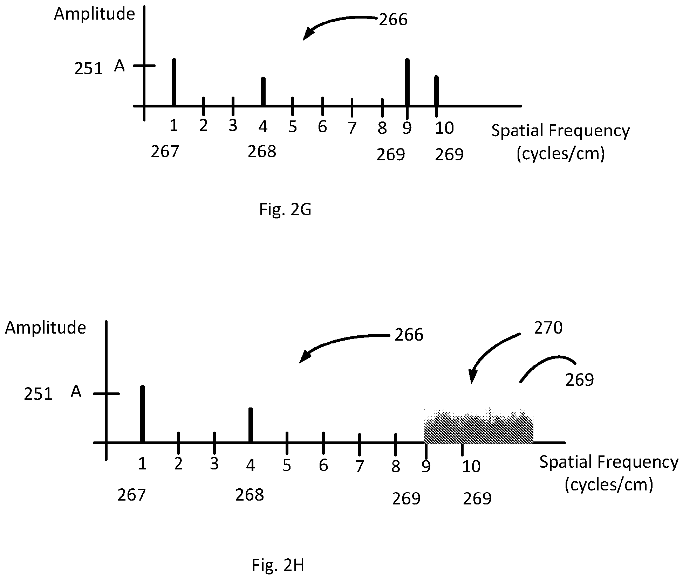

The surface finish 230 of the surface 201 may be stochastic, but some workpieces also have a surface finish 230 that includes features that are periodic across positions in space, for example as in Fig. 2D. The inventors have realized that such a surface finish 230, whether periodic or stochastic, may be characterized by its spatial frequency spectrum. For example, a spectrum of the frequency and amplitude of a stochastic surface is schematically illustrated in Fig. 2H, and may be described as having a spectrum 270 similar to that of noise.

**System for measuring surface finish**

Fig. 2A schematically illustrates a prior art system 240 for measuring surface finish of a workpiece 150. The workpiece 150 of Fig. 2A is further schematically illustrated in Fig. 2B and Fig. 2C.

An example of a surface 250 is provided in Fig. 2D, in which surface 250 is periodic (in this example, sinusoidal), with amplitude A 251 shown in the Y-axis, and period P 252 indicated along its position along the X-axis. The height (H) of the surface 250 at a point (D) in along the distance may be described as follows:

$$H = A \sin 2\, \pi D/P$$

where:

A is the amplitude;
The symbol "$\pi$" is the mathematical constant "pi;"
D is the distance from the origin 255;
P is the period, measured in distance.

If the amplitude (A) is 5 mm, and the period (P) is 0.5 centimeters, then the height (H) of the surface 250 at a point (D) in centimeters from the origin 255 may be described as follows:

$$H = 5 \sin 2\, \pi D/0.5$$

In this example, if D = 0.125 centimeters from the origin 255, the height (H) of surface 250 is:

$$H = 5 \sin 2\, \pi\, (0.125/0.5)\ = 5 \sin 2\, \pi\, (0.25) = 5 \sin \pi/2 = 5\ \text{mm}.$$

Similarly, if D = 0.327 centimeters from the origin 255, the height (H) of surface 250 is:

$$H = 5 \sin 2\, \pi\, (0.375/0.5)\ = 5 \sin 2\, \pi\, (3/4) = \text{-}5\ \text{mm}.$$

Spatial frequency is a characteristic of a physical surface that is periodic across position in space. Spatial frequency is not a function of time. The surface 250 may be said to have a frequency of 2 cycles/centimeter.

The system 240 includes a datum 241 (which may be referred to as a "physical reference datum"), and a stylus 245 coupled to the datum 241. The stylus 245 touches points on the surface 201 of the workpiece 150 to produce a set of surface measurements, relative to the datum 241. In order to obtain measurements sufficient for assessing surface finish 230, the datum 241 must be straight and rigid to a high degree of accuracy, and the stylus 245 must be able to move, relative to the datum 241, with a high degree of precision. Due to the required high-precision, the measuring features of coordinate measuring machines have historically been unable to measure surface finish. Illustrative embodiments described herein enable assessment of the surface finish 230 of a workpiece by a CMM 100 without the high-precision datum 241. Moreover, in view of the fact that illustrative embodiments do not require and do not have a datum, they enable assessment of the surface finish 230 of a workpiece by a CMM 100 without the previously-required ability to move a stylus 245 with the high degree of precision relative to such a datum 241.

Fig. 2E schematically illustrates the spectrum 256 of surface 250, which may be referred-to as the spatial spectrum of the surface 250.

Fig. 2F schematically illustrates a surface 230 that is more complex than surface 250, but which nevertheless can be approximated as a summation of periodic frequencies. Consequently, the surface 230 may be represented in part by the frequencies of its periodic components. In this example, Fig. 2G schematically illustrates the spatial spectrum 266 of the surface 230, and shows that surface 230 has a low-frequency periodic component 267 at 1 cycle/centimeter, a smaller-amplitude mid-frequency component 268 at 4 cycles/centimeter, and high-frequency components 269 at 9 cycles/centimeter and 10 cycles/centimeter. In general, higher spatial frequencies (e.g., 269) represent surface finish 230, lower spatial frequencies (e.g., 267) represent the expected geometry of the surface 201, and intermediate frequencies (e.g., 268) represent waviness 220. In this example, the prefixes "low," "lower," "medium," "intermediate," "high" and "higher" are intended only to distinguish the components from one another.

In this example, the low-frequency component 267 (shown in Fig. 2G and Fig. 2H) is due to the curvature of surface 201. If the low-frequency component 267 is the highest spatial frequency attributable to the expected geometry of the workpiece 150, it may be referred to as the maximum spatial frequency of the expected geometry. It should be noted that some components of a surface 201 may be periodic (e.g., 267 and 268 in Fig. 2H) even though other components (e.g., 270 in Fig. 2H) may be stochastic.

Also in this example, the mid-frequency component 268 is due to the waviness 220 of the surface 201. The high-frequency components 269 are due to the surface finish 230. If the mid-frequency component 268 is the highest spatial frequency attributable to the waviness of the workpiece 150, it may be referred to as the maximum waviness frequency of the expected geometry.

Although traditional coordinate measuring machines 100 are capable of detecting large features that cause a workpiece to fail to meet its specification, as well as waviness, they are not suited for (or capable of) measuring surface finish 230. Instead, prior art systems for measuring surface finish typically require specialized, dedicated high-precision hardware.

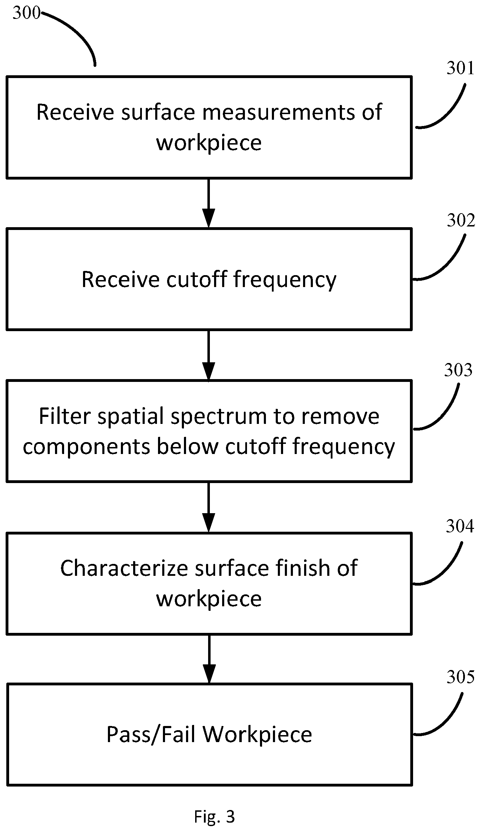

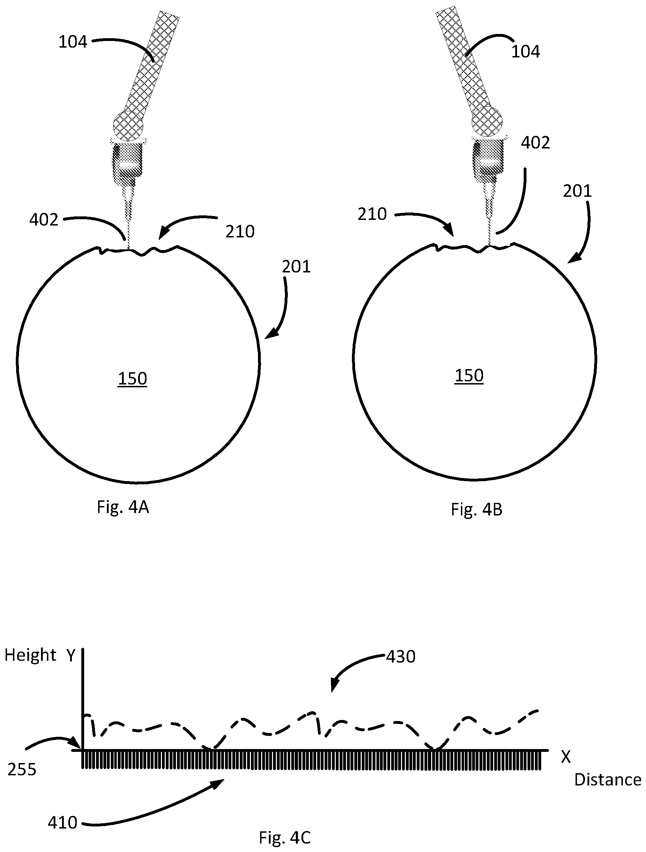

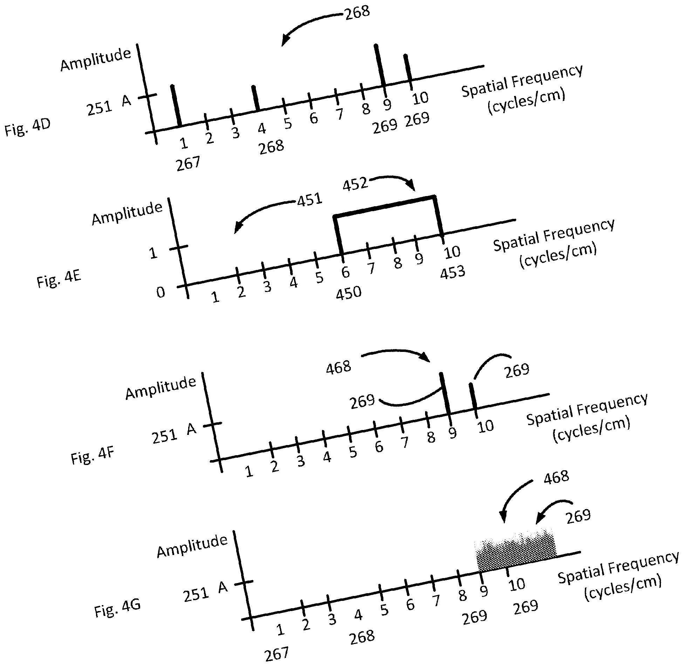

Fig. 3 is a flow chart that illustrates a method 300 of determining the surface frequency of a workpiece with a coordinate measuring machine, or a dedicated surface measuring instrument, and Fig. 4A and Fig. 4B schematically illustrate a coordinate measuring machine 100 in the process of measuring surface finish 230 of the workpiece 150, and Figs. 4C, 4D, and 4E schematically illustrate inputs and outputs at steps from the method 300. It should be noted that this method 300 is simplified from a longer process that may be used to determine the surface frequency of a workpiece. Accordingly, the method 300 may have many steps that those skilled in the art likely would use. In addition, some of the steps may be performed in a different order than that shown, or at the same time. Those skilled in the art therefore can modify the process as appropriate.

At step 301, a computer, such a computer in the controller 130 for example, receives surface measurements of the workpiece 150 measured by a coordinate measuring machine 100. For example, receiving such surface measurements may be accomplished by controlling the arm 104 of the CMM 100 to measure the locations of several points 410 along the surface 201 of the workpiece using the probe 402. The probe 402 is a tactile stylus that touches the points 410 on the workpiece 150, or, in non-claimed examples, an optical probe, for example.

The several points 410 are equally-spaced. In some embodiments, however, the workpiece 150 may be measured by dragging the probe 402 continuously across the workpiece surface 201 to produce a continuous measurement or stream of measurements. If measurements of equally-spaced points are not available, some embodiments may produce equally-spaced measurements by interpolating between available measurements, or selecting equally-spaced points from a continuous measurement. Alternatively, if measurements of equally-spaced points are not available, some non-claimed embodiments may perform the process 300 using techniques known in the art of digital signal processing for working with non-uniform sample sequences, such as non-uniform discrete Fourier transforms, and digital filters such as the FIR filter.

Each measurement produces a data point, and the measurements, collectively, produce a set of data points 430, as schematically illustrated in Fig. 4C. In preferred embodiments, to avoid aliasing, the spacing between the equally-spaced points 410 defines a spatial frequency that is at least twice the spatial the frequency of highest-frequency component 269 the spatial frequency of the surface finish 230.

At step 302, a computer processor receives, from a computer memory, a cutoff frequency 450. The computer processor and computer memory may be part of the CMM 100 (e.g., computer 137; memory 136), or may be part of an off-board computer (for example, host computer 140).

Frequencies above the cutoff frequency 450 represent measurements of surface finish 230, and frequencies below the cutoff frequency 450 represent measurements of the expected geometry of the workpiece 150, and may include measurements of waviness 220 at the surface 201 of the workpiece 150. Preferably, the cutoff frequency 450 is lower than the lowest component of the surface finish 230, and above the highest frequency of the spectrum of the expected geometry, and waviness.

At step 303 a computer processor (e.g., 137; 140) processes the set of data points to filter out frequencies below the cutoff frequency 450, and thereby produces a surface finish spectrum 468 limited to frequencies above the cutoff frequency 450, as schematically illustrated in Fig. 4F and 4G, namely by producing a spectrum of the data points 430, for instance via a discrete Fourier transform (DFT) or a fast Fourier transform (FFT), and then removing or deleting all frequencies below the cutoff frequency 450. Alternatively, in non-claimed examples, the computer processor (e.g., 137; 140) may implement a high-pass filter using methods known from the art of digital signal processing, in which the filter includes a reject band 451 below the cutoff frequency 450, and a pass band 452 above the cutoff frequency. In some embodiments, the pass band may be limited by an upper bound 453.

At step 304, the computer processor (137; 140) characterizes the surface finish 230 based on the surface finish spectrum 468 by comparing the surface finish spectrum 468 to a specification for the workpiece, to determine whether the surface finish is within a specified tolerance set forth in the specification. Such a tolerance may be specified as the spectrum's amplitude, peak amplitude, average amplitude, or spectral energy density, to name but a few examples.

In addition to measuring the surface finish 230 of the workpiece 150, in some embodiments the coordinate measuring machine 100 also measures other features of the workpiece 150, such as physical dimensions different from its surface finish. Measuring such other features may be done before determining the surface frequency of a workpiece, after determining the surface frequency of a workpiece (i.e., before or after the method 300), or even during the process of determining the surface frequency of a workpiece, such us during step 304.

At step 305, the computer processor (137; 140) determines, and optionally indicates to a user (e.g., by displaying a result via computer screen 145), whether the workpiece 150 meets (passes) or fails to meet (fails) a specification, based on the aforementioned comparison of the surface finish spectrum 468 with the specification.

The following is a list of reference numbers used herein:

100: Coordinate measuring machine;
101: Floor;
102: Base;
103: Measuring device;
104: Arm;
105: Probe
107: Table;
110: X-Y plane;
111: Measurement space;
122: Movable features;
125: CMM user interface;
125A: Control buttons;
125B: Control knobs;
130: Control system;
131: Bus;
132: Communications interface;
133: Motion Controller;
134: Measurement analyzer;
135: Sensor input;
136: Memory;
137: Computer processor;
140: Host computer;
141: Cable;
145: Computer screen;
150: Workpiece;
201: Surface of workpiece;
202: Specified surface of workpiece;
210: Irregularity in workpiece;
220: Waviness;
230: Surface finish;
231: Peak;
232: Valley;
240: Datum-based system for measuring surface finish;
241: Datum;
245: Stylus;
250: Surface having a spatial frequency;
251: Amplitude of surface;
252: Period of surface;
255: Origin;
256: Spatial spectrum;
260: Complex periodic surface;
266: Spatial spectrum of complex surface;
267: Low-frequency component of spatial spectrum;

268: Mid-frequency component of spatial spectrum;
269: High-frequency component of spatial spectrum;
270: Spatial spectrum of a stochastic portion of surface finish;
402: Surface finish probe (e.g., stylus; optical probe);
430: Set of data points;
450: Cutoff frequency;
451: Reject band;
452: Pass band;
453: Upper boundary of pass band;
468: Surface finish spectrum.

Various embodiments of the invention may be implemented at least in part in any conventional computer programming language. For example, some embodiments may be implemented in a procedural programming language (*e.g.,* "C"), or in an object oriented programming language (*e.g.,* "C++"). Other embodiments of the invention may be implemented as preprogrammed hardware elements (e.g., application specific integrated circuits, FPGAs, and digital signal processors), or other related components.

In an alternative embodiment, the disclosed apparatus and methods may be implemented as a computer program product for use with a computer system. Such implementation may include a series of computer instructions fixed on a tangible medium, such as a non-transient computer readable medium (*e.g.,* a diskette, CD-ROM, ROM, FLASH memory, or fixed disk). The series of computer instructions can embody part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (e.g., shrink wrapped software), preloaded with a computer system (*e.g.,* on system ROM or fixed disk), or distributed from a server or electronic bulletin board over the network (*e.g.,* the Internet or World Wide Web). Of course, some embodiments of the invention may be implemented as a combination of both software (*e.g.,* a computer program product) and hardware. Still other embodiments of the invention are implemented as entirely software.

The embodiments of the invention described above are intended to be merely exemplary; numerous variations and modifications will be apparent to those skilled in the art. The scope of the present invention is defined in the appended claims.

**Claims**

1. A coordinate measuring machine system for assessing a surface finish (230) of a workpiece (150) having a surface (201) and an expected geometry, the system comprising:

   - a coordinate measuring machine (100) having a coordinate system referenced to a point on the coordinate measuring machine and configured to control a tactile stylus (245) to measure a plurality of evenly-spaced points (410) on the surface (201) of the workpiece (150) relative to the coordinate system referenced to the point on the coordinate measuring machine, thereby producing a plurality of measurements, wherein each measurement produces a data point, and the measurements, collectively, produce a set of data points; and
   - a computer (140) configured to:

     ▪ receive the set of data points;
     ▪ receive a cutoff frequency (450);
     ▪ process the data points to produce a spatial spectrum of the data points, the spatial spectrum of the data points having a plurality of frequencies;
     ▪ remove, from the spatial spectrum, all frequencies below the cutoff frequency to produce a surface finish spatial spectrum (468), the surface finish spatial spectrum limited to frequencies above the cutoff frequency (450) ; and
     ▪ compare the surface finish spatial spectrum to a specification for the workpiece, to determine whether the surface finish is within a tolerance set forth in the specification.

**2.** The system of claim 1, wherein the expected geometry has a maximum spatial frequency, and the cutoff frequency (450) is equal to or greater than the maximum spatial frequency.

**3.** The system of claim 1, wherein the computer (140) is further configured to measure dimensions of the workpiece (150) with the tactile stylus (245).

**4.** The system of claim 1, wherein:

- the expected geometry is **characterized by** a maximum expected geometry spatial frequency;
- the workpiece also has a surface waviness (220) **characterized by** a maximum waviness frequency; and
- the cutoff frequency (450) is above the greater of the maximum expected geometry spatial frequency and the maximum waviness frequency.

**5.** A method of assessing, with a coordinate measuring machine (100) having a coordinate system referenced to a point on the coordinate measuring machine and configured to control a tactile stylus (245) to measure a plurality of evenly-spaced points on a surface of a workpiece relative to the coordinate system referenced to the point on the coordinate measuring machine, a surface finish (230) of a workpiece (150), the method comprising:

- measuring, with the tactile stylus (245) of the coordinate measuring machine (100), the plurality of evenly-spaced points (410) on the surface (201) of the workpiece (150) to produce a plurality of measurements, wherein each measurement produces a data point, and the measurements, collectively, produce a set of data points (430);
- retrieving, from a computer memory (136), a cutoff frequency (450);
- processing the data points to produce a spatial spectrum (256) of the data points, the spatial spectrum of the data points having a plurality of frequencies;
- removing, from the spatial spectrum (256), all frequencies below the cutoff frequency (450) to produce a surface finish spatial spectrum (468), the surface finish spatial spectrum limited to frequencies above the cutoff frequency; and
- comparing the surface finish spatial spectrum to a specification for the workpiece, to determine whether the surface finish is within a tolerance set forth in the specification.

**6.** The method of claim 5, wherein the workpiece (150) has an expected geometry, and the expected geometry has a maximum spatial frequency, and the cutoff frequency (450) is the maximum spatial frequency, particularly wherein

- the expected geometry is **characterized by** a maximum expected geometry spatial frequency;
- the workpiece (150) also has a surface waviness (220) **characterized by** a maximum waviness frequency; and
- the cutoff frequency (450) is above the greater of the maximum expected geometry spatial frequency and the maximum waviness frequency.

**7.** The method of claim 5, further comprising measuring dimensions of the workpiece (150) with the tactile stylus (245).

**8.** A non-transient computer programmed product bearing non-transient executable computer code, the executable computer code comprising:

- code for controlling a tactile stylus (245) of a coordinate measuring machine (100) to measure a plurality of evenly-spaced points (410) on a surface (201) of a workpiece (150), the coordinate measuring machine having a coordinate system referenced to a point on the coordinate measuring machine, and configured to control the probe to measure the plurality of evenly-spaced points on the surface of the workpiece relative to the coordinate system referenced to the point on the coordinate measuring machine, thereby producing a plurality of measurements, wherein each measurement produces a data point, and the measurements, collectively, produce a set of data points;
- code for receiving, from a computer memory (136), a cutoff frequency (450);

 - code for processing the data points to produce a spatial spectrum of the data points, the spatial spectrum of the data points having a plurality of frequencies;
 - code for removing, from the spatial spectrum, all frequencies below the cutoff frequency to produce a surface finish spatial spectrum, the surface finish spatial spectrum limited to frequencies above the cutoff frequency; and

- code for comparing the surface finish spatial spectrum to a specification for the workpiece, to determine whether the surface finish is within a tolerance set forth in the specification.

9. The non-transient computer programmed product of claim 8, wherein the workpiece (150) has an expected geometry, and the expected geometry has a maximum spatial frequency, and the cutoff frequency (450) is equal to or greater than the maximum spatial frequency.

10. The non-transient computer programmed product of claim 8, wherein:

- the workpiece (150) has an expected geometry **characterized by** maximum expected geometry spatial frequency;
- the workpiece (150) also has a surface waviness (220) **characterized by** a maximum waviness frequency; and
- the cutoff frequency (450) is above the greater of the maximum expected geometry spatial frequency and the maximum waviness frequency.

**Patentansprüche**

1. Koordinatenmessmaschinensystem zur Beurteilung einer Oberflächenbeschaffenheit (230) eines Werkstück (150) mit einer Oberfläche (201) und einer erwarteten Geometrie, wobei das System Folgendes umfasst:

- eine Koordinatenmessmaschine (100), die ein auf einen Punkt auf der Koordinatenmessmaschine bezogenes Koordinatensystem aufweist und dafür ausgelegt ist, einen Taststift (245) zu steuern, um eine Vielzahl von gleichmäßig beabstandeten Punkten (410) auf der Oberfläche (201) des Werkstücks (150) relativ zu dem auf den Punkt auf der Koordinatenmessmaschine bezogenen Koordinatensystem zu messen, wodurch eine Vielzahl von Messungen erzeugt wird, wobei jede Messung einen Datenpunkt erzeugt und die Messungen zusammen einen Satz von Datenpunkten erzeugen; und
- einen Computer (140), der dafür ausgelegt ist,

  - den Satz von Datenpunkten zu empfangen;
  - eine Grenzfrequenz (450) zu empfangen;
  - die Datenpunkte zu verarbeiten, um ein räumliches Spektrum der Datenpunkte zu erzeugen, wobei das räumliche Spektrum der Datenpunkte eine Vielzahl von Frequenzen aufweist;
  - aus dem räumlichen Spektrum alle Frequenzen unterhalb der Grenzfrequenz zu entfernen, um ein räumliches Spektrum der Oberflächenbeschaffenheit (468) zu erzeugen, wobei das räumliche Spektrum der Oberflächenbeschaffenheit auf Frequenzen oberhalb der Grenzfrequenz (450) begrenzt ist; und
  - das räumliche Spektrum der Oberflächenbeschaffenheit mit einer Spezifikation für das Werkstück zu vergleichen, um zu bestimmen, ob die Oberflächenbeschaffenheit innerhalb einer in der Spezifikation festgelegten Toleranz liegt.

2. System nach Anspruch 1, wobei die erwartete Geometrie eine maximale räumliche Frequenz aufweist und die Grenzfrequenz (450) gleich oder größer als die maximale räumliche Frequenz ist.

3. System nach Anspruch 1, wobei der Computer (140) ferner dafür ausgelegt ist, Abmessungen des Werkstücks (150) mit dem Taststift (245) zu messen.

4. System nach Anspruch 1, wobei:

- die erwartete Geometrie durch eine maximale räumliche Frequenz der erwarteten Geometrie gekennzeichnet ist;
- das Werkstück auch eine Oberflächenwelligkeit (220) aufweist, die durch eine maximale Welligkeitsfrequenz gekennzeichnet ist; und
- die Grenzfrequenz (450) oberhalb der größeren von der maximalen räumlichen Frequenz der erwarteten Geometrie und der maximalen Welligkeitsfrequenz liegt.

5. Verfahren zur Beurteilung einer Oberflächenbeschaffenheit (230) eines Werkstücks (150) mit einer Koordinatenmessmaschine (100), die ein auf einen Punkt auf der Koordinatenmessmaschine bezogenes Koordinatensystem aufweist und dafür ausgelegt ist, einen Taststift (245) zu steuern, um eine Vielzahl von gleichmäßig beabstandeten Punkten auf einer Oberfläche eines Werkstücks relativ zu dem auf den Punkt auf der Koordinatenmessmaschine bezogenen Koordinatensystem zu messen, wobei das Verfahren Folgendes umfasst:

- Messen der Vielzahl von gleichmäßig beabstandeten Punkten (410) auf der Oberfläche (201) des Werkstücks (150) mit dem Taststift (245) der Koordinatenmessmaschine (100), um eine Vielzahl von Messungen zu erzeugen, wobei jede Messung einen Datenpunkt erzeugt und die Messungen zusammen einen Satz von Datenpunkten (430) erzeugen;
- Abrufen einer Grenzfrequenz (450) aus einem Computerspeicher (136);
- Verarbeiten der Datenpunkte, um ein räumliches Spektrum (256) der Datenpunkte zu erzeugen, wobei das räumliche Spektrum der Datenpunkte eine Vielzahl von Frequenzen aufweist;
- Entfernen aller Frequenzen unterhalb der Grenzfrequenz (450) aus dem räumlichen Spektrum (256), um ein räumliches Spektrum der Oberflächenbeschaffenheit (468) zu erzeugen, wobei das räumliche Spektrum der Oberflächenbeschaffenheit auf Frequenzen oberhalb der Grenzfrequenz begrenzt ist; und
- Vergleichen des räumlichen Spektrums der Oberflächenbeschaffenheit mit einer Spezifikation für das Werkstück, um zu bestimmen, ob die Oberflächenbeschaffenheit innerhalb einer in der Spezifikation festgelegten Toleranz liegt.

6. Verfahren nach Anspruch 5, wobei das Werkstück (150) eine erwartete Geometrie aufweist und die erwartete Geometrie eine maximale räumliche Frequenz aufweist und wobei die Grenzfrequenz (450) die maximale räumliche Frequenz ist, wobei insbesondere

- die erwartete Geometrie durch eine maximale räumliche Frequenz der erwarteten Geometrie gekennzeichnet ist;
- das Werkstück (150) auch eine Oberflächenwelligkeit (220) aufweist, die durch eine maximale Welligkeitsfrequenz gekennzeichnet ist; und
- die Grenzfrequenz (450) oberhalb der größeren von der maximalen räumlichen Frequenz der erwarteten Geometrie und der maximalen Welligkeitsfrequenz liegt.

7. Verfahren nach Anspruch 5, ferner umfassend das Messen von Abmessungen des Werkstücks (150) mit dem Taststift (245).

8. Nichtflüchtiges computerprogrammiertes Produkt, das einen nichtflüchtigen ausführbaren Computercode trägt, wobei der ausführbare Computercode Folgendes umfasst:

- einen Code zum Steuern eines Taststifts (245) einer Koordinatenmessmaschine (100), um eine Vielzahl von gleichmäßig beabstandeten Punkten (410) auf einer Oberfläche (201) eines Werkstücks (150) zu messen, wobei die Koordinatenmessmaschine ein auf einen Punkt auf der Koordinatenmessmaschine bezogenes Koordinatensystem aufweist und dafür ausgelegt ist, die Sonde zu steuern, um die Vielzahl von gleichmäßig beabstandeten Punkten auf der Oberfläche des Werkstücks relativ zu dem auf den Punkt auf der Koordinatenmessmaschine bezogenen Koordinatensystem zu messen, wodurch eine Vielzahl von Messungen erzeugt wird, wobei jede Messung einen Datenpunkt erzeugt und die Messungen zusammen einen Satz von Datenpunkten erzeugen;
- einen Code zum Empfangen einer Grenzfrequenz (450) aus einem Computerspeicher (136);
- einen Code zum Verarbeiten der Datenpunkte, um ein räumliches Spektrum der Datenpunkte zu erzeugen, wobei das räumliche Spektrum der Datenpunkte eine Vielzahl von Frequenzen aufweist;
- einen Code zum Entfernen aller Frequenzen unterhalb der Grenzfrequenz aus dem räumlichen Spektrum, um ein räumliches Spektrum der Oberflächenbeschaffenheit zu erzeugen, wobei das räumliche Spektrum der Oberflächenbeschaffenheit auf Frequenzen oberhalb der Grenzfrequenz begrenzt ist; und
- einen Code zum Vergleichen des räumlichen Spektrums der Oberflächenbeschaffenheit mit einer Spezifikation für das Werkstück, um zu bestimmen, ob die Oberflächenbeschaffenheit innerhalb einer in der Spezifikation festgelegten Toleranz liegt.

9. Nichtflüchtiges computerprogrammiertes Produkt nach Anspruch 8, wobei das Werkstück (150) eine erwartete Geometrie aufweist und die erwartete Geometrie eine maximale räumliche Frequenz aufweist und wobei die Grenzfrequenz (450) gleich oder größer als die maximale räumliche Frequenz ist.

10. Nichtflüchtiges computerprogrammiertes Produkt nach Anspruch 8, wobei:

- das Werkstück (150) eine erwartete Geometrie aufweist, die durch die maximale räumliche Frequenz der erwarteten Geometrie gekennzeichnet ist;
- das Werkstück (150) auch eine Oberflächenwelligkeit (220) aufweist, die durch eine maximale Welligkeitsfrequenz gekennzeichnet ist; und
- die Grenzfrequenz (450) oberhalb der größeren von der maximalen räumlichen Frequenz der erwarteten Geometrie und der maximalen Welligkeitsfrequenz liegt.

**Revendications**

1.  Système de machine de mesure tridimensionnelle pour apprécier un état de surface (230) d'une pièce à travailler (150) ayant une surface (201) et une géométrie attendue, le système comprenant :

    - une machine de mesure tridimensionnelle (100) ayant un système de coordonnées référencé à un point sur la machine de mesure tridimensionnelle et configurée pour commander un stylet tactile (245) pour mesurer une pluralité de points régulièrement espacés (410) sur la surface (201) de la pièce à travailler (150) par rapport au système de coordonnées référencé au point sur la machine de mesure tridimensionnelle, produisant ainsi une pluralité de mesures, dans lequel chaque mesure produit un point de données, et les mesures, collectivement, produisent un ensemble de points de données ; et
    - un ordinateur (140) configuré pour :

        ▪ recevoir l'ensemble des points de données ;
        ▪ recevoir une fréquence de coupure (450) ;
        ▪ traiter les points de données pour produire un spectre spatial des points de données, le spectre spatial des points de données ayant une pluralité de fréquences ;
        ▪ éliminer, du spectre spatial, toutes les fréquences au-dessous de la fréquence de coupure pour produire un spectre spatial d'état de surface (468), le spectre spatial d'état de surface étant limité à des fréquences au-dessus de la fréquence de coupure (450) ; et
        ▪ comparer le spectre spatial d'état de surface à une spécification pour la pièce à travailler, pour déterminer si l'état de surface est au sein d'une tolérance présentée dans la spécification.

2.  Système selon la revendication 1, dans lequel la géométrie attendue a une fréquence spatiale maximale, et la fréquence de coupure (450) est égale ou supérieure à la fréquence spatiale maximale.

3.  Système selon la revendication 1, dans lequel l'ordinateur (140) est en outre configuré pour mesurer des dimensions de la pièce à travailler (150) avec le stylet tactile (245).

4.  Système selon la revendication 1, dans lequel :

    - la géométrie attendue est **caractérisée par** une fréquence spatiale de géométrie attendue maximale ;
    - la pièce à travailler présente également une ondulation de surface (220) **caractérisée par** une fréquence d'ondulation maximale ; et
    - la fréquence de coupure (450) est au-dessus de la plus élevée parmi la fréquence spatiale de géométrie attendue maximale et la fréquence d'ondulation maximale.

5.  Procédé pour apprécier, à l'aide d'une machine de mesure tridimensionnelle (100) ayant un système de coordonnées référencé à un point sur la machine de mesure tridimensionnelle et configurée pour commander un stylet tactile (245) pour mesurer une pluralité de points régulièrement espacés sur une surface d'une pièce à travailler par rapport au système de coordonnées référencé au point sur la machine de mesure tridimensionnelle, un état de surface (230) d'une pièce à travailler (150), le procédé comprenant :

    - la mesure, avec le stylet tactile (245) de la machine de mesure tridimensionnelle (100), de la pluralité de points régulièrement espacés (410) sur la surface (201) de la pièce à travailler (150) pour produire une pluralité de mesures, dans lequel chaque mesure produit un point de données, et les mesures, collectivement, produisent un ensemble de points de données (430) ;
    - la récupération, à partir d'une mémoire d'ordinateur (136), d'une fréquence de coupure (450) ;
    - le traitement des points de données pour produire un spectre spatial (256) des points de données, le spectre spatial des points de données ayant une pluralité de fréquences ;

- l'élimination, du spectre spatial (256), de toutes les fréquences au-dessous de la fréquence de coupure (450) pour produire un spectre spatial d'état de surface (468), le spectre spatial d'état de surface étant limité à des fréquences au-dessus de la fréquence de coupure ; et
- la comparaison du spectre spatial d'état de surface à une spécification pour la pièce à travailler, pour déterminer si l'état de surface est au sein d'une tolérance présentée dans la spécification.

6. Procédé selon la revendication 5, dans lequel la pièce à travailler (150) a une géométrie attendue, et la géométrie attendue a une fréquence spatiale maximale, et la fréquence de coupure (450) est la fréquence spatiale maximale, en particulier dans lequel

- la géométrie attendue est **caractérisée par** une fréquence spatiale de géométrie attendue maximale ;
- la pièce à travailler (150) présente également une ondulation de surface (220) **caractérisée par** une fréquence d'ondulation maximale ; et
- la fréquence de coupure (450) est au-dessus de la plus élevée parmi la fréquence spatiale de géométrie attendue maximale et la fréquence d'ondulation maximale.

7. Procédé selon la revendication 5, comprenant en outre la mesure des dimensions de la pièce à travailler (150) avec le stylet tactile (245).

8. Produit non transitoire programmé par ordinateur portant un code machine exécutable non transitoire, le code machine exécutable comprenant :

- un code pour commander un stylet tactile (245) d'une machine de mesure tridimensionnelle (100) afin de mesurer une pluralité de points régulièrement espacés (410) sur une surface (201) d'une pièce à travailler (150), la machine de mesure tridimensionnelle ayant un système de coordonnées référencé à un point sur la machine de mesure tridimensionnelle, et configurée pour commander la sonde afin de mesurer la pluralité de points régulièrement espacés sur la surface de la pièce à travailler par rapport au système de coordonnées référencé au point sur la machine de mesure tridimensionnelle, produisant ainsi une pluralité de mesures, dans lequel chaque mesure produit un point de données, et les mesures, collectivement, produisent un ensemble de points de données ;
- un code pour recevoir, à partir d'une mémoire d'ordinateur (136), une fréquence de coupure (450) ;
- un code pour traiter les points de données afin de produire un spectre spatial des points de données, le spectre spatial des points de données ayant une pluralité de fréquences ;
- un code pour éliminer, du spectre spatial, toutes les fréquences au-dessous de la fréquence de coupure afin de produire un spectre spatial d'état de surface, le spectre spatial d'état de surface étant limité à des fréquences au-dessus de la fréquence de coupure ; et
- un code pour comparer le spectre spatial d'état de surface à une spécification pour la pièce à travailler, afin de déterminer si l'état de surface est au sein d'une tolérance présentée dans la spécification.

9. Produit non transitoire programmé par ordinateur selon la revendication 8, dans lequel la pièce à travailler (150) a une géométrie attendue, et la géométrie attendue a une fréquence spatiale maximale, et la fréquence de coupure (450) est égale ou supérieure à la fréquence spatiale maximale.

10. Produit non transitoire programmé par ordinateur selon la revendication 8, dans lequel :

- la pièce à travailler (150) a une géométrie attendue **caractérisée par** une fréquence spatiale de géométrie attendue maximale ;
- la pièce à travailler (150) présente également une ondulation de surface (220) **caractérisée par** une fréquence d'ondulation maximale ; et
- la fréquence de coupure (450) est au-dessus de la plus élevée parmi la fréquence spatiale de géométrie attendue maximale et la fréquence d'ondulation maximale.

Fig. 1A

103

104

105

150

Fig. 1B

125

125A

125C

125B

X-Axis

Z-Axis

125A

Camera

Up/Down

Focus

125A

Rec

Y-Axis

125A

Fig. 1C

EP 3 746 742 B1

130

| Communications Interface 132 | Motion Controller 133 | Measurement Analyzer 134 |
|---|---|---|

Bus 131

| Sensor Input 135 | Memory 136 | Computer Processor 137 |
|---|---|---|

Fig. 1D

Fig. 1E

150

201

210

210

201

231

232

231

220

230

202

Fig. 1F

220

Fig. 1G

202

230

Fig. 1H

245

241

210

240

201

150

Fig. 2A (prior art)

220

230

231
232

232

231

150

Fig. 2C

Fig. 2B

Fig. 2D

Fig. 2E

Fig. 2F

Amplitude

251 A

266

1 2 3 4 5 6 7 8 9 10   Spatial Frequency
267        268              269   269   (cycles/cm)

Fig. 2G

Amplitude

251 A

266

270

269

1 2 3 4 5 6 7 8 9 10   Spatial Frequency
267        268              269   269   (cycles/cm)

Fig. 2H

300

301

Receive surface measurements of
workpiece

302

Receive cutoff frequency

303

Filter spatial spectrum to remove
components below cutoff frequency

304

Characterize surface finish of
workpiece

305

Pass/Fail Workpiece

Fig. 3

Fig. 4A

Fig. 4B

Fig. 4C

Fig. 4D

Amplitude

268

251 A

Spatial Frequency
(cycles/cm)

1 2 3 4 5 6 7 8 9 10

267   268   269 269

Fig. 4E

Amplitude

451   452

1

0

1 2 3 4 5 6 7 8 9 10

450   453

Spatial Frequency
(cycles/cm)

Fig. 4F

Amplitude

468   269

251 A   269

1 2 3 4 5 6 7 8 9 10

Spatial Frequency
(cycles/cm)

Fig. 4G

Amplitude

468   269

251 A

1 2 3 4 5 6 7 8 9 10

267   268   269 269

Spatial Frequency
(cycles/cm)

**EP 3 746 742 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 88751418

- US 2016116268 A1